Europäisches Patentamt

European Patent Office

Office européen des brevets

(11) Publication number: **0 100 324**
**B1**

# (12) EUROPEAN PATENT SPECIFICATION

(45) Date of publication of patent specification: **27.05.87**

(51) Int. Cl.⁴: **G 01 S 5/10**

(21) Application number: **83900336.5**

(22) Date of filing: **12.01.83**

(86) International application number:
**PCT/DK83/00003**

(87) International publication number:
**WO 83/02501 21.07.83 Gazette 83/17**

## (54) A SYSTEM FOR LOCALIZING LAID CABLES OR PIPES.

(30) Priority: **14.01.82 DK 124/82**

(43) Date of publication of application:
**15.02.84 Bulletin 84/07**

(45) Publication of the grant of the patent:
**27.05.87 Bulletin 87/22**

(84) Designated Contracting States:
**GB NL SE**

(56) References cited:
**DE-A-2 937 900**
**GB-A-2 013 062**
**US-A-3 715 758**
**US-A-3 774 215**
**US-A-3 848 254**

(73) Proprietor: **JYDSK TELEFON-AKTIESELSKAB**
**Sletvej 30**
**DK-8310 Tranbjerg J (DK)**

(72) Inventor: **JENSEN, Leo Anker**
**Dalvej 15**
**DK-8260 Viby J (DK)**

(74) Representative: **Patentanwälte Wenzel & Kalkoff**
**Grubes Allee 26 Postfach 730466**
**D-2000 Hamburg 73 (DE)**

Courier Press, Leamington Spa, England.

## Description

The invention concerns a system for locating buried cables or pipelines, comprising a plurality of relay stations each of which comprises transmitting means, at least some of the relay stations being arranged at fixed positions, whose geographic data are precisely known; at least one mobile measuring station including display means and transceiving means arranged to determine data representative of the differences in distance travelled by positioning signals transmitted from the relay stations to the respective measurement station and to retransmit these data; and at least one fixed or mobile base station including transceiving means, at least one of said base stations being provided with an electronic data processor which is arranged to calculate, from the data received from each measuring station and on the basis of the geographic data of the relay stations, the geographic position of each measuring station, the result of this calculation being retransmitted to the respective measuring station.

If, in practice, a defect in buried pipes or cables makes a digging up of these objects necessary, the localisation thereof is normally carried out as follows: When the pipes or cables are buried, their positioning is mapped out. By means of such mapping it is possible to reach the approximate placement by measurement. In order to avoid time-consuming digging attempts the mapping-out must be very accurate, and as cables and pipes have to be laid at places where corresponding marking poles will not remain undisturbed, very exact surveying has to be carried out each time the cables or pipes are to be recovered.

The locating of fixed or mobile objects by means of radio waves is a well-known method. US—A 3 848 254 for instance discloses a method of locating vehicles as follows: A central station transmits a signal to a transmitter in the vehicle; the signal starts the transmission of pulses, which are modulated by means of a carrier wave. This carrier wave is received by a number of fixed stations which demodulate the signal and transmit it to the central station where a comparison of phases is made and consequently a position determination is calculated.

From US—A 3 774 215 there is known a vehicle position locating system having the features outlined in the first paragraph of this specification. The main aim of this known system is to ensure an accurate location of a plurality moving objects such as vessels, land-based vehicles or the like at a time by one communication station without any interference of communication data from other communication stations and/or moving objects.

These known methods of radio location cannot be applied for locating buried objects such as cables or pipes in accordance with the main purpose of the present invention, because the following demands must be met to this end:

1) The geographic data of the laid cables/pipes have to be kept permanently and in such a way that they can be visualized in the form of a map containing information about coast lines, roads, land register boundaries etc.

2) At least the mobile station being used for recovering the cable/pipe must be able to receive the necessary data for an orientation in relation to characteristic features of the landscape or the buildings in the area concerned. This necessitates that calibrations and interpolations be carried out automatically and without weighting the mobile station with heavy EDP equipment.

3) The mobile station must be so light that it can be carried by one person without difficulty and that it can be operated by personnel without special training. This implies that the transmitter output of the mobile station is small.

It is therefore the task of the present invention to suggest a radio installation by means of which it is not only possible to determine the geographic placement of a pipe or a cable, but also to locate any point on the pipe or the cable with such a high degree of accuracy that they can be recovered without any previous trial digging being necessary.

In a locating system having the above known features this task is solved in accordance with the present invention in that each measuring station comprises circuit means arranged to measure the delays between the arrival times of the positioning signals from the actuated relay stations, said delays representing the said difference data; that associated with the electronic data processor, there is provided a memory containing topographic data representative of features of the area in which the cable or pipeline is buried as well as position data indicative of the course of the cable or pipeline with respect to said features, said position data being entered into the memory by the electronic data processor at the time of laying the cable or pipeline in response to the data then received from each measuring station; that each base station is arranged to initiate, upon request from a measuring station, the transmission of the positioning signals from a selected group of relay stations and to retransmit the calculated geographic positions of each measuring station to the latter stations together with the associated topographic data; and that the display means are arranged to provide, in response to a data retransmitted from a base station, a graphical display of the course of the cable or pipeline in its surroundings together with the position of the associated measuring station. In such a system, a base station, when demanded by a measuring station, initiates the transmission of positioning signals from a selected group of relay stations to the measuring station, which forwards the result of the positioning to the base station which converts it to a geographic localization on the basis of data stored in the computer's data store. When cables or pipe are buried the localization will be registered and with the purpose of the recovery of the buried cable/pipe, the localization together with the characteristic geographic data of the spot concerned will be reproduced thus marking the position of the cable/pipe.

Preferably, the base station will have means for controlling the accuracy of the localization. The propagation speed of radio waves varies in accordance with the temperature and the humidity of the air. Polarizing direction and phase may be altered by reflections from buildings and metallic items.

On a very hilly ground or when relay stations are placed permanently or provisionally on high buildings, differences of height may affect the accuracy of measurement. It is obvious that the localization is not necessarily a correct geographic mark. The coordinates of a certain point of measurement, which has been determined by means of radio waves from two or more relay stations, must be reproducable with the demanded accuracy, so that the reading when the measuring station is at a certain position will be unambiguous for this very position and differ from the reading of any other position. However, as it cannot be taken for sure that the localization is made by means of the same group of relay stations as well at the recovery as at the laying a correction as to differences of height may be necessary. Such correction advantageously may be carried out as follows:

Two relay stations' aerials are placed with a known difference of height, so that it is possible to correct the difference in height on the basis of the time difference between the arrival of the signals from the two aerials. It is also possible to store topographical data in the computer's memory so that the corrections can be carried out automatically.

If provisional relay stations are used these may comprise measuring equipment corresponding to that of the mobile measuring stations, so that their placing in relation to the permanent relay stations can be determined and supplied into the computer's program library. It may be important to provide all relay stations with such an equipment which can be activated from the base station. By treating the single relay stations as measuring stations the base station can determine their reciprocal distances. If the data achieved thereby do not coincide with stored data, corrections for changes in the propagation speed of the radio waves due to atmospherics may be calculated.

As already mentioned the mobile measuring station should only have a weight such as to enable its carrying by a single person. Therefore it should only contain the equipment which is necessary for the communication with the base transmitter and for receiving signals from neighbouring relay stations plus the required electronic counters to measure the relative hours for the arrival of signals. These counters may be started by the first signal to arrive, but they may also be started by a signal coming from the base transmitter.

Expediently, an indication of the cable/pipe or of the spot at which the measuring station is placed may be carried out as follows: In continuation of the measuring station's aerial a "pointer" is arranged, for instance a telescopic tube, with which the operator points at the cable/pipe, and at the same time a signal is transmitted to the base station, giving the information that the result of a position measurement or a request for a position indication is to be transferred now.

When the cable/pipe is laid the intervals between the markings may be made independent of how rectilinearly the cable/pipe is laid at the respective place, the computer of the base station being able to determine any point on the cable/pipe by interpolation. The lengths of the intervals may be appointed on a rough estimate by the operator, but the mobile station may also be prepared for mounting on a cable plough or on a furrow excavator, and the tractor of these may be provided with devices for an electronic measurement of the driving speed and the turning of the steering wheel. These measurements will then control the intervals between the position indications automatically.

Preferably the communication between base station and measuring station may be performed in different ways. If the base station is manned, which is not necessary, a conversation may be carried out in the normal manner and the operator may bring a map of the respective district. Such an off-line communication, however, is not extremely practical. Besides the necessary time-metering equipment the measuring station may therefore be provided with a display unit and at least one of the base stations may have means for recording the geographic data of the district concerned in the form of draft maps while a marking of a laid cable/pipe and a marking of the position of the measuring station are made. Communication with the base station may be performed by means of a simple keyboard. In short the measuring station may be designed as an "intelligent" terminal for the base station's memory.

In the following, a preferred embodiment of the invention will be explained in greater detail and with reference to the purely schematic drawings, in which

Fig. 1 shows a system according to the present invention,

Fig. 2 shows a simplified block diagram of a measuring station,

Fig. 3 shows a simplified block diagram of a base station, and

Fig. 4 shows a block diagram of automatic excitation of the generation of geographic coordinates during cable-laying.

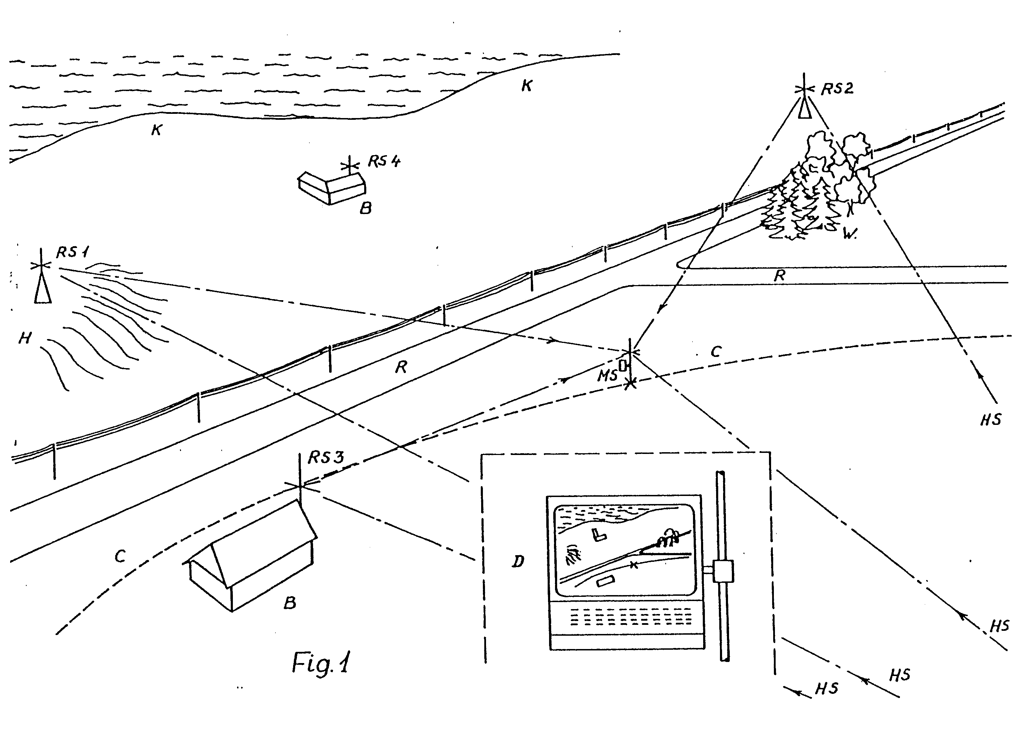

Fig. 1 shows symbols of some landscape elements, which are normally indicated on a map: Buildings B, rises or hills H, larger wooded areas W, roads R and coast lines K. Around in the terrain shown relay stations RS1—RS4 are placed. As it is shown corresponding aerials may be placed on roofs, hilltops or buildings especially made for this purpose.

In Fig. 1 a mobile measuring station MS is shown to be used for tracing a buried cable, which is indicated by dotted line C. As indicated by the dot-and-dash lines, all the stations communicate with a base station HS not shown. When demanded by the person operating the measuring station the base station transmits a draft map to the measuring station MS, where it is shown on a display unit D. The mobile measuring station and its display unit are shown on an enlarged scale at the bottom of Fig. 1. Simultaneously the base station starts a cyclic activation of a number of relay stations, i.e. relay stations RS1, RS2 and RS3 of Fig. 1, which in turn transmit distance-determining signals received by the measuring station MS. The last-mentioned measures the time at which the signals arrive in relation to a reference time, which e.g. may be the time when the first signal arrives. The result of the measurement is transmitted to the base station HS, which knowing the place of the relay stations and the topographical conditions converts the result to coordinates appearing on the display unit D. The display screen also shows the carrying of the cable together with the point of the cable which is to be inspected. The length of the cable from a fixed point to the defective spot has been measured by means of a usual error-measuring equipment, and as the length of the cable from one marking point to another is known data in the memory, the position of the defective spot may be calculated quite easily.

When the mobile station has come sufficiently close to the point wanted the base station may change from the draft map to a system of coordinates which corresponds to an area of a few square meters in the surroundings of the defective spot and therefore allows a localization which is sufficiently accurate to indicate the spot where the cable should be recovered by digging.

The surest localization, is obtained by the use of at least three relay transmitters. As an example it is assumed that RS1, RS2 and RS3, being controlled in cyclic sequence by the base station, are activated to transmit brief pulses of ultra-high frequency. These are received by the measuring station MS which provides the time-differences $t_2 - t_1$, $t_3 - t_2$ and $t_3 - t_1$ for an adequate number of pulse cycles and transmits the result to the base station HS which then calculates the mean value and the standard deviation of the results measured. If the standard deviations exceed the accuracy of measuring claimed they must be cancelled and new measurements be made, possibly by activating more or other relay transmitters. Two of these three time-differences will do for a localization, but the third one should be taken into consideration as a control. If differences of height must be corrected for, the third difference must be taken into consideration.

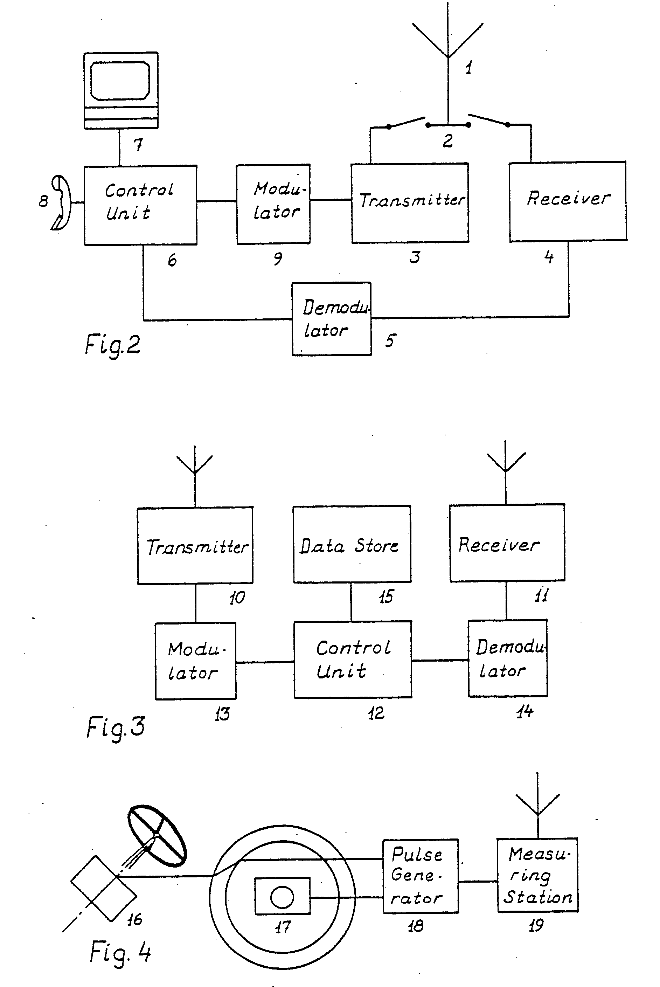

Fig. 2 shows a very simplified diagram of the mobile measuring station. The basic element of this station is an aerial 1 which by means of switches 2 may be connected to either a transmitter 3 or a receiver 4. The receiver is connected to a control unit 6 through a demodulator 5, which unit 6 is provided with a display unit 7 and a micro telephone 8. The control unit 6 is also connected to the transmitter 3 through a modulator 9. In the control unit 6 the electronic counters are integrally mounted. They determine the relative time of arrival of the pulses from the relay transmitters and also the fixed "instructions" necessary for the measuring station's functioning as a data terminal.

Fig. 3 shows that the base station essentially comprises a transmitter 10 and a receiver 11, both of which are connected to a control unit 12 through a modulator 13 and a demodulator 14, respectively. The control unit 12 has incorporated elements necessary for manual and automatic operation, i.e. it functions as the central control unit for inputting and outputting data and their processing. The control unit has access to a data store 15. This data store may be common for several base stations. Part of the necessary equipment for processing the in-coming and out-going data may also be common.

An essential advantage of the invention is that the geographical data of a laid cable can be obtained from the same equipment which is used for the recovery. In other words, the data necessary for the recovery can be produced by the same equipment as that explained in the general part of this specification. It is important that the memory of the base station not be filled with unnecessary position indications. As already mentioned the distances between the marking points can be varied corresponding to the cable having been laid almost rectilinearly or in curves. The principle is shown in Fig. 4, in which there is a device 16 which measures the turning angle of a tractor, and a device 17 measuring the turns of a tractor's wheel and thereby the driving velocity. The values obtained are converted into electric pulses which control the frequency of a pulse generator 18. For each pulse the generator causes an activation of the measuring station 19 as described in Fig. 2.

## Claims

1. A system for locating buried cables or pipelines, comprising
— a plurality of relay stations (RS1—RS4) each of which comprises transmitting means, at least some of the relay stations being arranged at fixed positions whose geographic data are precisely known,
— at least one mobile measuring stations (MS; 19) including display means (D; 7) and transceiving means (1—4) arranged to determine data representative of the differences in distance travelled by positioning signals transmitted from the relay stations to the respective measuring station and to retransmit these data,
— at least one fixed or mobile base station (HS) including transceiving means (10, 11), at least one of said base stations being provided with an electronic data processor (12) which is arranged to calculate, from the data received from each measuring station and on the basis of the geographic data of the relay stations, the geographic position of each measuring station, the result of this calculation being retransmitted to the respective measuring station,

the system being characterised in that

— each measuring station (MS; 19) comprises circuit means (6) arranged to measure the delays between the arrival times of the positioning signals from the actuated relay stations, said delays representing the said difference data,

— associated with the electronic data processor (12), there is provided a memory (15) containing topographic data representative of features of the area in which the cable or pipeline is buried as well as position data indicative of the course (C) of the cable or pipeline with respect to said features, said position data being entered into the memory by the electronic data processor at the time of laying the cable or pipeline in response to the data then received from each measuring station,

— each base station (HS) is arranged to initiate, upon request from a measuring station, the transmission of the positioning signals from a selected group of relay stations (RS1—RS4) and to retransmit the calculated geographic positions of each measuring station to the latter stations together with the associated topographic data,

— the display means (D; 7) are arranged to provide, in response to the data retransmitted from a base station, a graphical display of the course of the cable or pipeline in its surroundings together with the position of the associated measuring station.

2. A system as claimed in claim 1, characterised in that each base station has means for controlling the accuracy of the calculated results and for causing transmission of positioning signals from other relay stations in case of · possible inaccuracies.

3. A system as claimed in claim 2, characterised in that the stations are equipped with instruments such as lightmeter, hygrometer, barometer, thermometer for recording the weather conditions during the measurement, these data being included in the calculations carried out by the electronic data processor (12).

4. A system as claimed in any one of claims 2 or 3, characterised in that the fixed stations are equipped with instruments recording the direction, velocity and force of the wind and especially recording mast swings of the aerials of the stations, these data being included in the calculations carried out by the electronic data processor (12).

5. A system as claimed in claim 2, characterised in that it incorporates means for the automatic correction of differences in altitude between the aerials of the relay stations and that of the measuring station.

6. A system as claimed in claim 5, characterised by the fact that relay stations located in a very hilly terrain comprise two separate transmission aerials mounted one above the other at a known distance from each other.

7. A system as claimed in any one of claims 1 to 6, characterised by the fact that at least the non-permanently placed relay stations are provided with an equipment providing the functions of a measuring station in order to determine the position of these relay stations in relation to other permanent relay stations.

8. A system as claimed in any one of claims 1 to 7, characterised in that each measuring station is implemented as a data terminal of a base station.

9. A system as claimed in claim 8, characterised in that each measuring station is equipped with a pointer in the form of a telescopic tube which is mounted so that it determines the plumb line of the station's aerial.

10. A system as claimed in claim 8, characterised in that each measuring station is mounted on a cable plough or an excavator, the tractor of which is equipped with measuring devices (16, 17) for the measurement of its driving velocity and the turn of its steering wheel and for converting the obtained values into electric signals controlling a pulse generator (18) which by each pulse activates the production of a position determination by means of the activated relay stations and the recording of the corresponding position data in the base station's memory.

**Patentansprüche**

1. Ein System zur örtlichen Bestimmung in der Erde verlegter Kabel oder Rohrleitungen umfassend

— eine Mehrzahl Umsetzstationen (RS1—RS4), von denen jede Sendemittel umfaßt, wobei mindestens einige der Umsetzstationen an festen Positionen angeordnet sind, deren geografische Daten genau bekannt sind,

— mindestens eine bewegliche Meßstation (MS; 19), die Display-(Anzeige-)mittel (D; 7) und Sende-Empfang-Mittel (1—4) umfaßt, die zur Bestimmung von Daten, die repräsentativ für Unterschiede in Entfernungen sind, die von Positioniersignalen durchlaufen werden, die ihrerseits von den Umsetzstationen an die entsprechende Meßstation gesendet werden, und zum Rücksenden dieser Daten angeordnet sind,

— mindestens eine feste oder mobile Basisstation (HS), die Sende-Empfang-Mittel (10, 11) umfaßt, wobei mindestens eine dieser Basisstationen mit einem elektronischen Datenprozessor (12) ausgerüstet ist, der der Errechnung der geografischen Position jeder Meßstation aus den von jeder Meßstation empfangenen Daten und auf der Basis der geografischen Daten der Umsetzstationen dient, wobei das Ergebnis dieser Rechnung an die entsprechende Meßstation zurückgesendet wird,

wobei das System dadurch gekennzeichnet ist, daß

— jede Meßstation (MS; 19) Schaltungsmittel (6) umfaßt, die die Verzögerungen zwischen den Ankunftszeitpunkten der Positioniersignale von den betätigten Umsetzstationen, messen, wobei die Verzögerungen die erwähnten Unterschiedsdaten repräsentieren,

— in Zuordnung zu dem elektronischen Datenprozessor (12) ein Speicher (15) vorgesehen ist, der topografische Daten, die repräsentativ für die Merkmale der Gegend sind, in der das Kabel oder die Rohrleitung verlegt ist, sowie Positionsdaten enthält, die den Verlauf (C) des Kabels oder der Rohrleitung in bezug auf diese Merkmale anzeigen, wobei die Positionsdaten von dem elektronischen Datenprozessor zum Zeitpunkt des Verlegens des Kabels oder der Rohrleitung in den Speicher eingegeben werden, und zwar im Ansprechen auf die dann von jeder Meßstation empfangenen Daten,

— jede Basisstation (HS) so angeordnet ist, daß sie auf Anforderung von einer Meßstation das Senden der Positioniersignale von einer ausgewählten Gruppe Umsetzstationen (RS1—RS4) in Gang setzt und die errechneten geografischen Positionen jeder Meßstation an die letztgenannten Stationen zusammen mit den zugeordneten topografischen Daten zurücksendet,

— die Displaymittel (D; 7) so ausgebildet sind, daß sie im Ansprechen auf die von einer Basisstation zurückgesendeten Daten eine grafische Anzeige des Verlaufs des Kabels oder der Rohrleitung in der Umgebung zusammen mit der Position der zugeordneten Meßstation hervorbringen.

2. Ein System nach Anspruch 1, dadurch gekennzeichnet, daß jede Basisstation Mittel zur Steuerung der Genauigkeit der errechneten Ergebnisse und zum Veranlassen des Sendens der Positioniersignale von anderen Umsetzstationen im Falle möglicher Ungenauigkeiten aufweist.

3. Ein System nach Anspruch 2, dadurch gekennzeichnet, daß die Stationen mit Instrumenten wie Lichtmesser, Hygrometer, Barometer, Thermometer zum Aufzeichnen der Wetterbedingungen während der Messung ausgerüstet sind, wobei diese Daten in den von dem elektronischen Datenprozessor (12) ausgeführten Rechnungen erfaßt werden.

4. Ein System nach irgendeinem der Ansprüche 2 oder 3, dadurch gekennzeichnet, daß die festen Stationen mit Instrumenten ausgerüstet sind, die die Richtung, Geschwindigkeit und Kraft des Windes und insbesondere Mastenschwingungen der Antennen der Stationen aufzeichnen, wobei diese Daten in den von dem elektronischen Datenprozessor (12) ausgeführten Rechnungen erfaßt werden.

5. Ein System nach Anspruch 2, dadurch gekennzeichnet, daß es Mittel zur automatischen Korrektur der Unterschiede in der Höhe zwischen den Antennen der Umsetzstationen und jener der Meßstation umfaßt.

6. Ein system nach Anspruch 5, gekennzeichnet durch die Tatsache, daß in einem sehr hügeligen Terrain befindliche Umsetzstationen zwei separate Sendeantennen umfassen, die Übereinander in einem bekannten Abstand zueinander angeordnet sind.

7. Ein System nach irgendeinem der Ansprüche 1 bis 6, gekennzeichnet durch die Tatsache, daß mindestens die nicht dauerhaft angeordneten Umsetzstationen mit einer Ausrüstung versehen sind, die die Funktionen einer Meßstation bereitstellt, um die Position dieser Umsetzstationen im Verhältnis zu anderen dauerhaften Umsetzstationen zu bestimmen.

8. Ein System nach irgendeinem der Ansprüche 1 bis 7, dadurch gekennzeichnet, daß jede Meßstation als Datenterminal einer Basisstation ausgeführt ist.

9. Ein System nach Anspruch 8, dadurch gekennzeichnet, daß jede Meßstation mit einer Markierung in Form eines teleskopischen Rohres ausgerüstet ist, das so angeordnet ist, daß es die Senkrechte der Stationsantenne bestimmt.

10. Ein System nach Anspruch 8, dadurch gekennzeichnet, daß jede Meßstation auf einem Kabelpflug oder einem Bagger angeordnet ist, deren Zugmaschine mit Meßvorrichtungen (16, 17) zur Messung der Fahrgeschwindigkeit und des Einschlages des Steuerrades und zur Umwandlung der erhaltenen Werte in einen Impulserzeuger (18) steuernde elektrische Signale ausgerüstet ist, wobei der Impulserzeuger mit jedem Impuls die Erzeugung einer Positionsbestimmung mittels der aktivierten Umsetzstationen und das Aufzeichnen der entsprechenden Positionsdaten in dem Speicher der Basisstation in Gang setzt.

### Revendications

1. Système pour situer des câbles ou pipe-lines enterrés, comprenant:
— une pluralité de stations de relais (RS1—RS4), chacune desquelles comprenant des moyens de transmission, au moins quelques unes des stations de relais étant agencées en des positions fixes dont les données géographiques sont précisément connues;
— au moins une station de mesure mobile (MS; 19), comprenant des moyens d'affichage (D; 7) et des moyens émetteurs-récepteurs (1—4) agencés pour déterminer des données représentatives de différences dans la distance parcourue par des signaux de positionnement transmis à partir des stations de relais à la station de mesure respective et pour retransmettre ces données;
— au moins une station de base mobile ou fixe (HS) comportant des moyens émetteurs-récepteurs (10, 11), au moins une desdites stations de base étant munie d'un calculateur électronique (12) préu pour calculer, à partir des données reçues de chaque station de mesure et sur la base des données géographiques des stations de relais, la position géographique de chaque station de mesure, le résultat de ce calcul, étant retransmis à la station de mesure respective,
le système étant caractérisé en ce que:
— chaque station de mesure (MS; 19) comprend un circuit (6) adapté pour mesurer les délais entre les temps d'arrivée des signaux de positionnement des stations de relais actionnées, lesdits délais représentant lesdites différences;
— associée au calculateur électronique (12), on prévoit une mémoire (15) contenant des données topographiques représentant des caractéristiques de la zone dans laquelle le câble ou le pipe-line est enterré, ainsi que des données de position représentant le trajet (C) du câble ou du pipe-line par rapport auxdites caractéristiques, lesdites données de position étant entrées dans la mémoire du calculateur électronique au moment de la dépose du câble ou du pipe-line en réponse aux données reçues alors à partir de chaque station de mesure;

— chaque station de base (HS) est agencée pour initier, sur demande d'une station de mesure, la transmission des signaux de positionnement à partir d'un groupe choisi de stations de relais (RS1—RS4) et pour retransmettre les positions géographiques calculées de chaque station de mesure à ces dernières, ainsi que les données topographiques associées;

— les moyens d'affichage (D; 7) sont agencés pour fournir, en réponse aux données retransmises à partir d'une station de base, un affichage graphique du trajet du câble ou du pipe-line dans son environnement, ainsi que la position de la station de mesure associée.

2. Système selon la revendication 1, caractérisé en ce que chaque station de base présente des moyens pour commander la précision des résultats calculés et pour transmettre des signaux de positionnement à partir d'autre stations de relais en cas d'inexactitudes possibles.

3. Système selon la revendication 2, caractérisé en ce que les stations sont équipées d'instruments, tels que des lumimètre, hygromètre, baromètre, thermomètre pour enregistrer les conditions climatiques pendant la mesure, ces données étant incluses dans les calculs réalisés par le calculateur électronique (12).

4. Système selon l'une quelconque des revendications 2 ou 3, caractérisé en ce que les stations fixes sont équipées d'instruments enregistrant la direction, la vitesse et la force du vent, et, en particulier, enregistrant des oscillations de mât des aériens des stations, ces données étant incluses dans les calculs réalisés par le calculateur électronique (12).

5. Système selon la revendication 2, caractérisé en ce qu'il comprend des moyens pour la correction automatique de différences d'altitude entre les aériens des stations de relais et ceux de la station de mesure.

6. Système selon la revendication 5, caractérisé en ce que des stations de relais situées dans un terrain très accidenté comprennent deux aériens de transmission séparés montés l'un au-dessus de l'autre à une distance connue l'un de l'autre.

7. Système selon l'une quelconque des revendications 1 à 6, caractérisé en ce qu'au moins les stations de relais installées de façon non permanente sont munies d'un appareillage fournissant les fonctions d'une station de mesure de façon à déterminer la position de ces stations de relais par rapport à d'autres stations de relais permanentes.

8. Système selon l'une quelconque des revendications 1 à 7, caractérisé en ce que chaque station de mesure est mise en oeuvre comme terminal de données d'une station de base.

9. Système selon la revendication 8, caractérisé en ce que chaque station de mesure est équipée d'un pointeur sous forme d'un tube télescopique qui est monté de façon à déterminer l'aplomb de l'aérien de la station.

10. Système selon la revendication 8, caractérisé en ce que chaque station de mesure est montée sur un excavateur de câble, dont le tracteur est équipé de dispositifs de mesure (16, 17) pour mesurer sa vitesse et la vitesse de rotation de sa roue de direction et pour convertir les valeurs obtenues en signaux électriques commandant un générateur d'impulsions (18) qui, à chaque impulsion, fournit une détermination de position au moyen des stations de relais activées et l'enregistrement des données de position correspondantes dans la mémoire de la station de base.

Fig.1

0 100 324

Fig.2

Fig.3

Fig. 4